# FASCICULE DE BREVET EUROPEEN

(11) **EP 1 318 742 B1**
(45) Date de publication et mention de la délivrance du brevet: **06.07.2005**
(21) Numéro de dépôt: 01969861.2
(22) Date de dépôt: 10.09.2001
(51) Int. Cl.: A47J 37/06, A47J 36/10

(54) **APPAREIL DE CUISSON MULTIFONCTION DU TYPE A CHARNIERE A OUVERTURE AUTOMATIQUE**
MULTIFUNKTIONELLES KOCHGERÄT MIT EINER AUTOMATISCH ÖFFNENDEN SCHARNIERVORRICHTUNG
MULTIPURPOSE COOKING APPLIANCE WITH AUTOMATIC HINGE OPENING

(30) Priorité: 19.09.2000 FR 0011936
(43) Date de publication de la demande: 18.06.2003
(73) Titulaire: SEB S.A., 69130 Ecully (FR)
(72) Inventeur: PATENOTRE, Yves, F-74370 Desingy (FR); PERRIER, Jean-Christophe, F-73100 Aix les Bains (FR)
(74) Mandataire: de Roquemaurel, Bruno
(86) Numéro de dépôt international: PCT/FR2001/002802
(87) Numéro de publication internationale: WO 2002/024043

(56) Documents cités:
- EP-A- 0 787 453
- US-A- 2 936 697
- US-A- 3 799 047
- US-A- 4 913 040
- US-A- 6 044 755

## Description

La présente invention concerne un appareil de cuisson du type comprenant deux plaques de cuisson électriques, disposées face à face et reliées l'une à l'autre par une charnière.

Elle s'applique notamment, mais non exclusivement, aux appareils de cuisson du type gaufrier ou grill-viande comportant deux plaques de cuisson qui pivotent l'une par rapport à l'autre, et entre lesquelles sont disposés les aliments à cuire.
Actuellement, les appareils de ce type nécessitent une intervention manuelle pour écarter les plaques afin d'y déposer ou retirer les aliments, ou de surveiller la cuisson. Cette solution s'avère peu pratique pour différentes raisons. Les manipulations nécessaires pour ouvrir et fermer l'appareil sont peu commodes. Il en résulte des risques de brûlure. Le temps de cuisson est laissé à l'appréciation de l'utilisateur. Il n'y a donc pas de répétabilité dans la qualité de la cuisson obtenue.

En outre, dans la plupart des appareils disponibles aujourd'hui, la régulation de la température de cuisson est effectuée par un thermostat électromécanique (fixe ou réglable) qui offre une précision au mieux de 50 °C pour la température des plaques de cuisson, ce qui ne permet pas d'obtenir des résultats de cuisson réguliers.

Par le brevet GB 621 155, on connaît un appareil de cuisson électrique comprenant un couvercle, un thermostat permettant d'ajuster la température et un mécanisme d'horlogerie permettant de définir un temps de cuisson, qui déclenche l'ouverture du couvercle et arrête le chauffage lorsque le temps de cuisson est atteint.
Le brevet US 2 936 697 décrit un autre appareil de cuisson électrique refermé par un couvercle, cet appareil effectuant automatiquement l'ouverture de couvercle et l'arrêt du chauffage à la fin du cycle de cuisson, ces opérations étant déclenchées par la dilatation d'une lame soumise à la température de cuisson.

Ces appareils font intervenir des mécanismes d'ouverture complexes et donc de coût élevé, et des organes de régulation de la température de cuisson présentant les inconvénients mentionnés ci-avant.

La présente invention a pour but de supprimer ces inconvénients. A cet effet, elle propose un appareil de cuisson du type comprenant :
- un boîtier constitué d'une coque inférieure et d'une coque supérieure, fixées l'une à l'autre par une articulation, et maintenues écartées par des premiers moyens de rappel élastiques,
- au moins une plaque de cuisson électrique disposée dans le boîtier,
- des moyens de verrouillage pour maintenir le boîtier fermé à l'encontre des moyens de rappel,
- des moyens de réglage de paramètres de cuisson, et
- des moyens de commande des moyens de verrouillage pour les amener en position déverrouillée en fonction des paramètres de cuisson, et ainsi commander l'ouverture du boîtier sous l'effet des moyens de rappel.

Selon l'invention, cet appareil de cuisson est caractérisé en ce que les moyens de verrouillage comprennent :
- une pièce de verrouillage liée à l'une des coques, de manière à être mobile entre une position déverrouillée et une position verrouillée dans laquelle elle coopère avec un doigt de verrouillage solidaire de l'autre coque pour maintenir le boîtier en position fermée,
- des seconds moyens de rappel élastiques pour ramener la pièce de verrouillage en position déverrouillée, et
- un électro-aimant commandé par les moyens de commande, pour maintenir la pièce de verrouillage en position verrouillée.

En n'utilisant qu'une seule pièce de verrouillage mobile et un électro-aimant, l'invention permet ainsi de simplifier d'une manière importante la réalisation de tels appareils de cuisson, et ce sans nécessiter des moyens de commande lourds et encombrants.

Cet appareil peut comprendre deux plaques de cuisson qui sont montées respectivement dans les deux coques du boîtier, et entre lesquelles sont disposés les aliments à cuire.

Avantageusement, l'appareil selon l'invention comprend un processeur connecté aux moyens de réglage des paramètres de cuisson, conçu pour commander l'électro-aimant en fonction des paramètres de cuisson.

Selon une particularité de l'invention, il comprend un contact électrique actionné par l'ouverture du boîtier, et connecté au processeur pour lui permettre de détecter la position, ouverte ou fermée, du boîtier.

Selon une autre particularité de l'invention, les plaques de cuisson sont couplées à des résistances électriques chauffantes, l'appareil comprenant en outre un relais commandé par le processeur pour commander l'alimentation électrique des résistances.

Selon encore une autre particularité de l'invention, les plaques de cuisson sont associées à un capteur de température relié au processeur qui est conçu pour commander l'alimentation des résistances chauffantes des plaques de cuisson, de manière maintenir celles-ci à une température de consigne, les moyens de réglage de paramètres de cuisson étant conçus pour définir une température de consigne.

Un mode de réalisation de l'appareil de cuisson selon l'invention sera décrit ci-après, à titre d'exemple non limitatif, avec référence aux dessins annexés dans lesquels :
La figure 1 représente une vue en coupe longitudinale d'un appareil de cuisson conforme à l'invention ;
La figure 2 montre en perspective partielle le système de verrouillage du couvercle de l'appareil illustré sur la figure 1 ;
Les figures 3 et 4 sont des vues partielles détaillées en coupe longitudinale de l'appareil représenté sur la figure 1, l'appareil étant montré fermé sur la figure 2 et ouvert sur la figure 3 ;
La figure 5 représente des courbes de température en fonction du temps illustrant le fonctionnement de l'appareil selon l'invention ;
La figure 6 représente schématiquement un circuit électrique de commande de l'appareil.

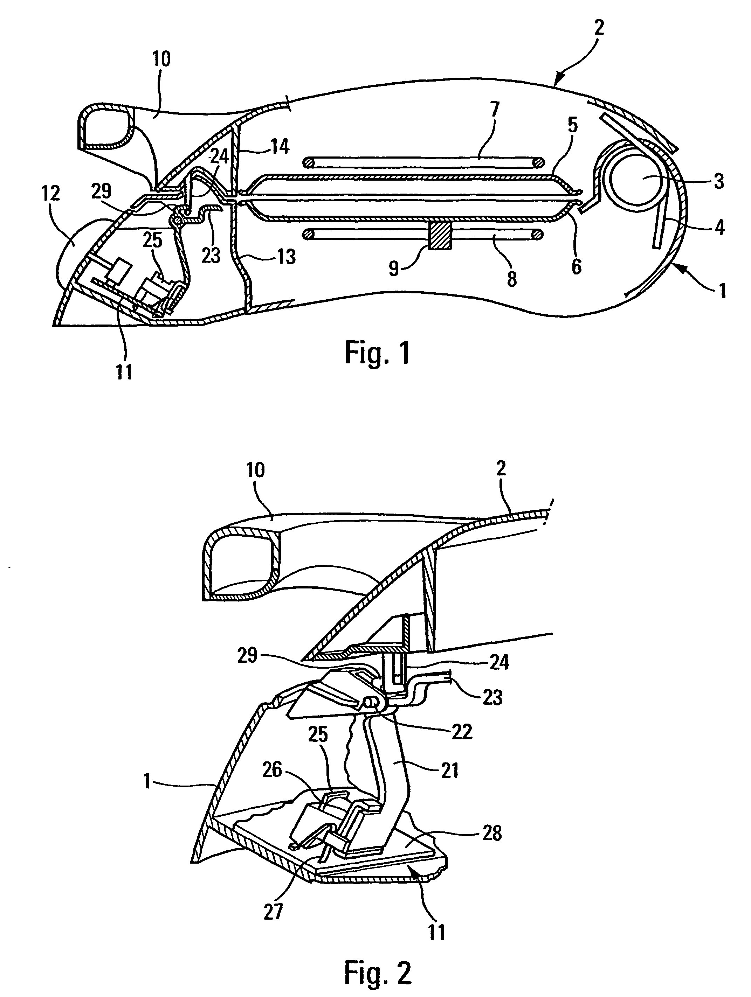

La figure 1 représente un appareil de cuisson du type comprenant deux plaques de cuisson 5, 6 disposées en regard l'une de l'autre dans un boîtier comprenant une coque inférieure 1 et une coque supérieure 2 formant couvercle et raccordée à la coque inférieure 1 par une charnière 3. Ces deux coques sont ramenées en position écartée l'une de l'autre par des moyens élastiques 4 tels qu'un ressort hélicoïdal de torsion intégré à la charnière 3, assurant une large ouverture de l'appareil en position ouverte. La coque supérieure comprend une poignée 10 située à l'opposé de la charnière 3 permettant à l'utilisateur de l'appareil de la tenir pour la refermer sur la coque inférieure 1. Les plaques de cuisson 5, 6 sont associées respectivement à des moyens de chauffage électriques 7, 8, tels que des résistances électriques chauffantes, disposés respectivement au-dessus de la plaque de cuisson supérieure, située dans la coque supérieure, et sous la plaque de cuisson 6 inférieure, située dans la coque inférieure.

Au moins l'une des deux résistances électriques 7, 8, par exemple la résistance électrique inférieure 8 peut être associée à un organe de régulation 9 pour réguler la température des résistances électriques au voisinage d'une certaine température de consigne

Selon l'invention, l'appareil de cuisson comprend par ailleurs un mécanisme de verrouillage de la coque supérieure 2 sur la coque inférieure 1, actionné par un dispositif de commande 11 qui peut être réglé par un bouton de programmation 12.

Les deux coques 1, 2 comprennent chacune une cloison 13, 14 perpendiculaire au plan de l'ouverture des deux coques et parallèle à l'axe de la charnière 3, divisant leur volume intérieur en deux compartiments, à savoir un compartiment de cuisson renfermant les plaques de cuisson et les résistances électriques, et un compartiment de commande et de verrouillage renfermant le mécanisme de verrouillage et le dispositif de commande 11 et de verrouillage de la coque supérieure 2 sur la coque inférieure 1.

Le compartiment de commande et de verrouillage de la coque inférieure 1 comporte une fenêtre supérieure disposée en regard d'un doigt de verrouillage 24 solidaire de la coque supérieure 2 et qui traverse le plan de l'ouverture du boîtier, qui s'engage dans cette fenêtre pour verrouiller la coque supérieure sur la coque inférieure.

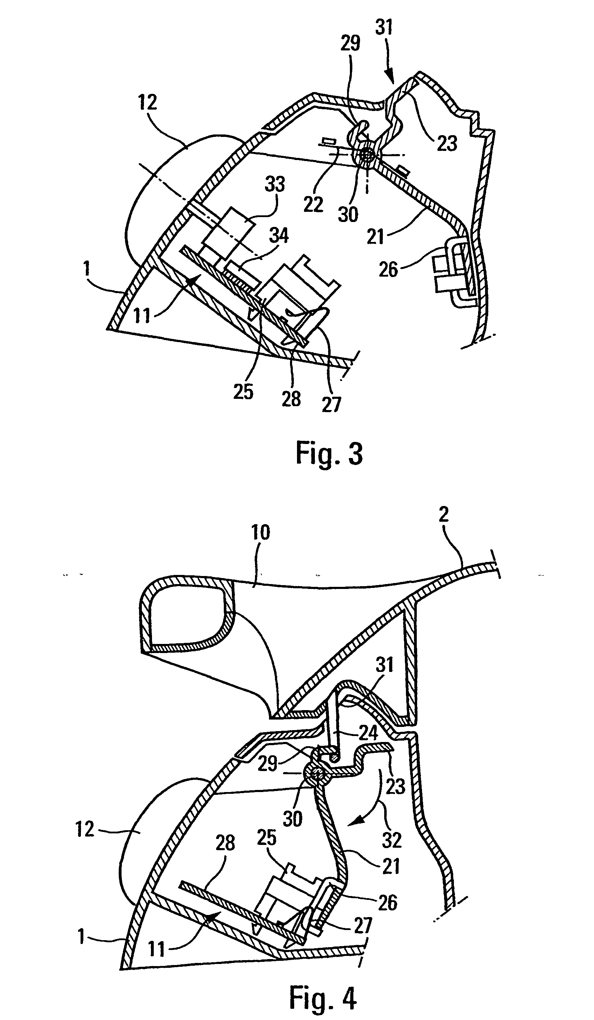

Sur les figures 2 à 4, ce mécanisme de verrouillage comprend dans la coque inférieure 1 une pièce de verrouillage montée pivotante autour d'un axe 30 parallèle au plan de l'ouverture du boîtier. Cette pièce de verrouillage comprend trois branches liées à son axe de pivotement et s'étendant dans un plan perpendiculaire à cet axe, à savoir une première branche formant crochet 29, une seconde branche formant un bras de levier 21 supportant à son extrémité inférieure une platine 26 disposée de manière à coopérer avec un électro-aimant 25, et une troisième branche supportant un volet de fermeture 23 de la fenêtre 31 d'introduction du doigt de verrouillage 24 dans la coque inférieure 1. La pièce de verrouillage est ramenée par un ressort 22 dans sa position déverrouillée montrée sur la figure 3. Dans cette position, le volet 23 ferme la fenêtre 31, ce qui évite la pénétration de corps étrangers dans le compartiment de commande et de verrouillage.

Le bras de levier 21 présente avantageusement une longueur relativement grande par rapport aux autres branches de la pièce de verrouillage, ce qui permet de réduire la force nécessaire pour maintenir la pièce de verrouillage en position verrouillée. L'électro-aimant 25 peut donc être de petite taille et commandé par un courant de faible intensité.

Le doigt de verrouillage 24 présente une forme en U de manière à ce qu'en position verrouillée des deux coques 1, 2, le crochet 29 puisse s'engager dans la forme en U pour retenir la coque supérieure 2 contre la coque inférieure à l'encontre du ressort 4.

L'électro-aimant 25 est monté sur une plaque de circuit imprimé 28 sur lequel sont montés des composants électroniques, et en particulier un potentiomètre 33 actionné par le bouton de commande 12 et un processeur, tel qu'un micro-contrôleur 34 (figure 3).

Lorsque que l'on veut faire cuire un aliment, on sélectionne le temps de cuisson ou une fonction préprogrammée à l'aide du bouton 12, ce qui fait tourner le potentiomètre 33 relié au micro-contrôleur 34. On place ensuite les aliments sur la plaque de cuisson inférieure 5, puis on fait pivoter la coque supérieure 2 autour de l'axe de la charnière 3, à l'encontre du ressort 4, pour fermer l'appareil. Au cours de ce mouvement de pivotement, le doigt de verrouillage 24 pénètre dans la fenêtre 31 en poussant le volet 23, ce qui fait pivoter la pièce de verrouillage à l'encontre du ressort 22, et donc place la platine 26 fixée à l'extrémité du bras 21 à proximité de l'électro-aimant 25. Si l'électro-aimant commandé par le micro-contrôleur 34 est sous tension, la platine 26 vient se coller contre celui-ci, ce qui verrouille le crochet 29 dans le doigt de verrouillage 24. Durant la fin de la course de la pièce de verrouillage, le bras 21 appuie sur une lame de contact 27 élastique, disposée sur la plaque de circuit imprimé 28, qui vient fermer un contact électrique 45 relié au micro-contrôleur 34. De cette manière, le micro-contrôleur 34 est averti que l'appareil est fermé, et démarre alors le cycle de cuisson.

A la fin du cycle de cuisson géré par le micro-contrôleur 34, celui-ci met hors tension l'électro-aimant 25, ce qui libère la pièce de verrouillage qui est ramenée par le ressort 22 dans sa position déverrouillée, et entraîne l'ouverture de l'appareil sous l'effet du ressort 4.

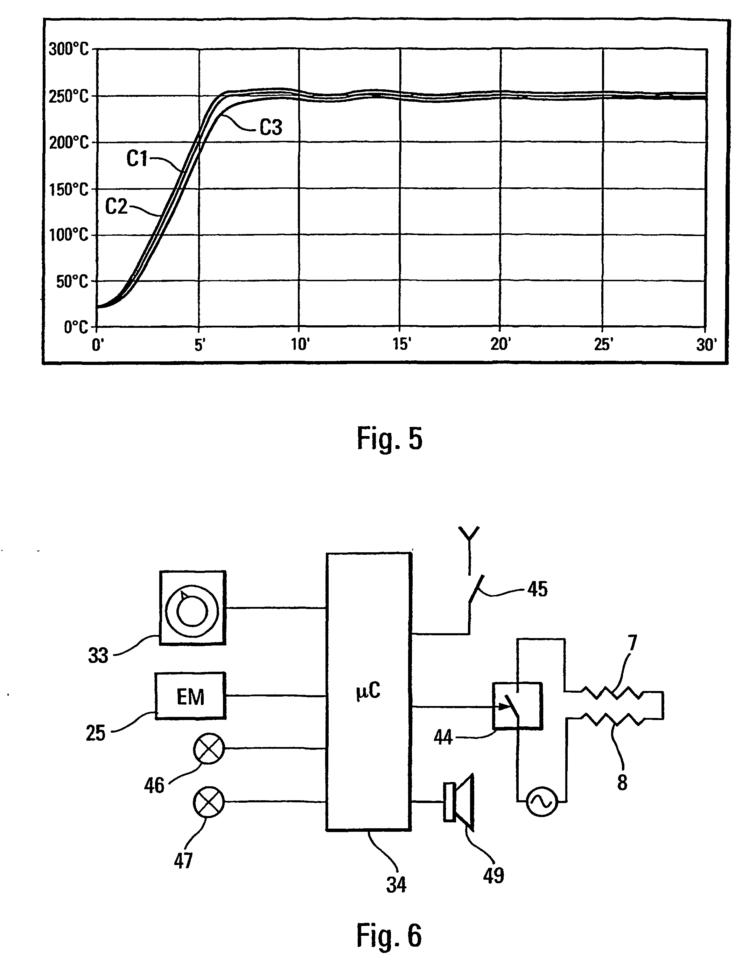

Tel que représenté sur la figure 6, le micro-contrôleur 34 peut également gérer des voyants lumineux 46, 47, tels que des LEDs qui sont allumées si l'appareil est sous tension et pendant un cycle de cuisson, et un dispositif d'émission sonore 49 qui peut être déclenché à la fin d'un cycle de cuisson lorsque l'appareil s'ouvre.

L'organe de régulation 9 peut être électromécanique et consister en un thermostat. Dans une variante préférée de réalisation de l'invention, cet organe de régulation 9 comprend un capteur de température placé au contact des plaques de cuisson 5, 6 et relié au micro-contrôleur 34. Ce capteur est par exemple de type résistif dont la valeur de résistance varie en fonction de sa température.

Durant le cycle de cuisson de l'appareil, la température des plaques 5, 6 est régulée par le micro-contrôleur 34 à partir d'une température de consigne qui est introduite par l'utilisateur au moyen du bouton 12, à l'aide d'un relais 44 (voir figure 6) qui commande la mise sous tension des résistances électriques 7, 8.

A cet effet, le micro-contrôleur 34 reçoit à intervalles réguliers du capteur des valeurs de température, à partir desquelles il évalue une valeur de dérivée, c'est-à-dire la vitesse d'évolution de la température des plaques de cuisson. Ces valeurs de température sont stockées dans une pile glissante, par exemple de 10 valeurs à partir desquelles la dérivée est calculée.

Durant tout le cycle de cuisson, le micro-contrôleur 34 évalue une condition de coupure des résistances de chauffage 7, 8, à l'aide d'une formule mathématique adéquate appliquée aux valeurs courantes de la température mesurée par le capteur et de la dérivée glissante de température calculée.

Cette formule mathématique est choisie de manière à éviter que la température des plaques de cuisson dépasse la température de consigne.

La figure 5 représente les courbes C1, C2, C3 d'évolution en fonction du temps de la température des plaques de cuisson 5, 6 et de la température mesurée par le capteur.

Sur cette figure, le cycle de cuisson comprend une première phase de montée en température des plaques de cuisson 5, 6, qui dure environ 5 minutes, durant laquelle la dérivée de température est à peu près constante. A la fin de cette première phase, la température mesurée par le capteur se rapproche de la température de consigne (environ 250 °C), et le micro-contrôleur estime que la condition de coupure de l'alimentation des résistances électriques 7, 8 est atteinte. Il commande donc le relais de coupure 44.

Au bout de quelques secondes de coupure de l'alimentation des résistances électriques, correspondant à la seconde phase du cycle de cuisson, le micro-contrôleur détecte que la dérivée de température s'infléchit (infléchissement des courbes C1, C2, C3), et remet les résistances chauffantes sous-tension jusqu'à ce que la condition de coupure des résistances soit à nouveau atteinte. Durant une troisième phase de maintien en température, les courbes C1, C2, C3 restent sensiblement à la température de consigne et la dérivée est nulle.

Cette disposition permet d'une part d'éviter un dépassement de la température de consigne de plusieurs dizaines de degrés qui se produit inévitablement lorsque l'on utilise des organes électromécaniques, et d'autre part de maintenir la température des plaques de cuisson sensiblement égale à la température de consigne qui peut être réglée avec une précision beaucoup plus importante, de l'ordre de 5 °C.
L'appareil selon l'invention peut donc être utilisé pour cuire différentes sortes d'aliments présentant des températures optimales de cuisson différentes.

Par ailleurs, si les plaques sont chaudes au moment de l'introduction des aliments à cuire dans l'appareil, elles refroidissent brutalement du fait que les aliments sont froids. Le micro-contrôleur 34 peut donc détecter ce moment à l'aide du calcul de dérivée, et donc déterminer précisément le démarrage du cycle de cuisson.

Avantageusement, le micro-contrôleur détermine le temps de cuisson, sachant que plus la température des plaques est faible lorsqu'on introduit les aliments, plus la durée de cuisson doit être longue.

Selon une particularité de l'invention, lorsque l'appareil s'ouvre en fin de cuisson, le micro-contrôleur passe dans un mode de maintien au chaud des aliments sur la plaque de cuisson, dans lequel il asservit la température des plaques de cuisson à une température de consigne de quelques dizaines de degrés, suffisante pour maintenir chauds les aliments qui viennent d'être cuits, mais inférieure à une température minimum de cuisson. Bien entendu, lorsque l'on referme l'appareil, le micro-contrôleur reprend en compte la température de consigne introduite par l'utilisateur à l'aide du bouton 12.

On peut prévoir des moyens séparés d'introduction de la température de consigne de cuisson et du temps de cuisson. Alternativement, le bouton 12 permet d'introduire le type d'aliment disposé dans l'appareil, le micro-contrôleur ayant alors accès à une table donnant le temps et la température de cuisson optimum en fonction du type d'aliment introduit.

## Revendications

1. Appareil de cuisson du type comprenant :
- un boîtier constitué d'une coque inférieure (1) et d'une coque supérieure (2), fixées l'une à l'autre par une articulation (3), et maintenues écartées par des premiers moyens de rappel élastiques (4),
- au moins une plaque de cuisson (5, 6) disposée dans le boîtier,
- des moyens de verrouillage pour maintenir le boîtier fermé à l'encontre des moyens de rappel,
- des moyens de réglage (12) de paramètres de cuisson, et
- des moyens de commande des moyens de verrouillage pour les amener en position déverrouillée en fonction des paramètres de cuisson, et ainsi commander l'ouverture du boîtier sous l'effet des moyens de rappel (4),
les moyens de verrouillage comprenant:
- une pièce de verrouillage liée à l'une des coques (1), de manière à être mobile entre une position déverrouillée et une position verrouillée dans laquelle elle coopère avec un doigt de verrouillage (24) solidaire de l'autre coque (2) pour maintenir le boîtier en position fermée, **caractérisé en ce que** les moyens de verrouillage comprennent
- des seconds moyens de rappel élastiques (22) pour ramener la pièce de verrouillage en position déverrouillée, et
- un électro-aimant (25) commandé par les moyens de commande, pour maintenir la pièce de verrouillage en position verrouillée.

2. Appareil de cuisson selon la revendication 1,
**caractérisé en ce qu'**il comprend deux plaques de cuisson (5, 6) qui sont montées respectivement dans les deux coques (1, 2) du boîtier.

3. Appareil de cuisson selon la revendication 1 ou 2,
**caractérisé en ce** la pièce de verrouillage est montée pivotante autour d'un axe (30) parallèle au plan de l'ouverture de la coque inférieure (1), et comprend trois branches reliées à son axe de pivotement et s'étendant dans un plan perpendiculaire à cet axe, à savoir une première branche formant crochet (29) coopérant avec le doigt de verrouillage (24), une seconde branche formant un bras de levier (21) supportant à son extrémité inférieure une platine (26) disposée de manière à coopérer avec l'électro-aimant (25), et une troisième branche supportant un volet de fermeture (23) d'une fenêtre (31) d'introduction du doigt de verrouillage (24).

4. Appareil de cuisson selon l'une des revendications 1 à 3,
**caractérisé en ce que** les moyens de commande des moyens de verrouillage comprennent un processeur (34) connecté aux moyens de réglage (12) de paramètres de cuisson, conçu pour commander l'électro-aimant (25) en fonction des paramètres de cuisson.

5. Appareil de cuisson selon la revendication 4,
**caractérisé en ce qu'**il comprend un contact électrique (45) actionné par l'ouverture du boîtier, et connecté au processeur (34) pour lui permettre de détecter la position, ouverte ou fermée, du boîtier.

6. Appareil de cuisson selon la revendication 3 ou 5,
**caractérisé en ce que** les plaques de cuisson (5, 6) sont couplées à des résistances électriques chauffantes (7, 8), l'appareil comprenant en outre un relais (44) commandé par le processeur (34) pour commander l'alimentation électrique des résistances.

7. Appareil de cuisson selon l'une des revendications 3 à 6,
**caractérisé en ce que** les plaques de cuisson sont associées à un capteur de température (9) relié au processeur (34) qui comprend des moyens pour commander l'alimentation des résistances chauffantes (7, 8) des plaques de cuisson (5, 6) de manière maintenir ces dernières à une température de consigne, les moyens de réglage (12) étant conçus pour définir une température de consigne du cycle de cuisson.

8. Appareil de cuisson selon la revendication 7,
**caractérisé en ce que** le processeur (34) comprend des moyens pour déclencher un mode de maintien au chaud, à la fin d'un cycle de cuisson, des moyens pour établir la température de consigne des plaques de cuisson à une valeur juste suffisante pour maintenir au chaud les aliments sur la plaque de cuisson (5, 6), en mode de maintien au chaud.

9. Appareil de cuisson selon la revendication 7 ou 8,
**caractérisé en ce que** le processeur (34) comprend des moyens pour calculer une valeur de dérivée glissante de la température fournie par le capteur, et des moyens pour évaluer une condition de coupure des résistances de chauffage (7, 8), en fonction de valeurs courantes de la température fournie par le capteur et de la dérivée glissante.

10. Appareil de cuisson selon l'une des revendications 7 à 9,
**caractérisé en ce qu'**il comprend des moyens pour définir le type d'aliment disposé sur les plaques de cuisson, le processeur (34) comprenant des moyens pour déterminer les paramètres de cuisson en fonction du type d'aliment ainsi défini.

11. Appareil de cuisson selon l'une des revendications 7 à 10,
**caractérisé en ce que** le processeur (34) comprend des moyens pour détecter un abaissement de température résultant de l'introduction des aliments à cuire sur la plaque de cuisson (5, 6), et des moyens pour déclencher un cycle de cuisson dès qu'un tel abaissement de température est détecté.

## Patentansprüche

1. Kochgerät der Art mit:
- einem Gehäuse, das aus einer unteren Schale (1) und einer oberen Schale (2) besteht, welche miteinander durch ein Gelenk (3) verbunden sind, und welche durch erste elastische Rückziehvorrichtungen (4) voneinander beabstandet gehalten werden,
- zumindest einer Kochplatte (5, 6), die in dem Gehäuse angeordnet ist,
- Verriegelungsvorrichtungen, um das Gehäuse entgegen den Rückziehvorrichtungen geschlossen zu halten,
- Vorrichtungen (12) zur Regelung der Garparameter, und
- Steuervorrichtungen für die Verriegelungsvorrichtungen, um sie in Abhängigkeit von den Garparametem in die entriegelte Position zu bringen und so das Öffnen des Gehäuses unter der Wirkung der Rüclaiehvorrichtungen (4) zu steuem,
wobei die Verriegelungsvorrichtungen aufweisen:
- ein Verriegelungsteil, das mit einer der Schalen (1) derart verbunden ist, dass es zwischen einer entriegelten Position und einer verriegelten Position beweglich ist, in welcher es mit einem einstückig mit der anderen Schale (2) ausgebildeten Verriegelungszapfen (24) zusammenwirkt, um das Gehäuse in der geschlossenen Position zu halten, **dadurch gekennzeichnet, dass** die Verriegelungsvorrichtungen aufweisen:
- zweite elastische Rückziehvorrichtungen (22), um das Veniegelungsteil in die entriegelte Position zurückzuführen, und
- einen Elektromagneten (25), der von den Steuervorrichtungen gesteuert wird, um das Verriegelungsteil in der verriegelten Position zu halten.

2. Kochgerät gemäß Anspruch 1,
**dadurch gekennzeichnet, dass** es zwei Kochplatten (5,6) aufweist, die jeweils in den beiden Schalen (1, 2) des Gehäuses angebracht sind.

3. Kochgerät gemäß Anspruch 1 oder 2,
**dadurch gekennzeichnet, dass** das Verriegelungsteil schwenkbar um eine parallel zu der Öffnungsebene der unteren Schale (1) liegende Achse (30) angebracht ist, und es drei Arme aufweist, die mit seiner Schwenkachse verbunden sind, und die sich in einer senkrecht zu dieser Achse liegenden Ebene erstrecken, nämlich einen ersten, einen Haken bildenden Arm (29), der mit dem Verriegelungszapfen (24) zusammenwirkt, einen zweiten, einen Hebelarm bildenden Arm (21), der an seinem unteren Ende eine Platte (26) trägt, die derart angeordnet ist, dass sie mit dem Elektromagneten (25) zusammenwirkt, und einen dritten Arm, der eine Verschlussklappe (23) für ein Fenster (31) für das Einführen des Verriegelungszapfens (24) trägt.

4. Kochgerät gemäß einem der Ansprüche 1 bis 3,
**dadurch gekennzeichnet, dass** die Steuervorrichtungen für die Verriegelungsvorrichtungen einen Prozessor (34) umfassen, der mit den Vorrichtungen (12) zur Regelung der Garparameter verbunden ist, und der dafür eingerichtet ist, den Elektromagneten (25) in Abhängigkeit von den Garparametern zu steuern.

5. Kochgerät gemäß Anspruch 4,
**dadurch gekennzeichnet, dass** es einen elektrischen Kontakt (45) aufweist, der durch das Öffnen des Gehäuses betätigt wird, und der mit dem Prozessor (34) verbunden ist, um ihm zu ermöglichen, die offene oder geschlossene Position des Gehäuses zu erfassen.

6. Kochgerät gemäß Anspruch 3 oder 5,
**dadurch gekennzeichnet, dass** die Kochplatten (5, 6) mit elektrischen Heizwiderständen (7, 8) gekoppelt sind, wobei das Gerät außerdem ein Relais (44) aufweist, das von dem Prozessor (34) gesteuert wird, um die elektrische Versorgung der Widerstände zu steuern.

7. Kochgerät gemäß einem der Ansprüche 3 bis 6,
**dadurch gekennzeichnet, dass** die Kochplatten mit einem Temperaturfühler (9) verbunden sind, der mit dem Prozessor (34) verbunden ist, und der Vorrichtungen aufweist, um die Versorgung der Heizwiderstände (7, 8) der Kochplatten (5, 6) derart zu steuern, dass diese letzteren auf einer Einstelltemperatur gehalten werden, wobei die Vorrichtungen (12) zur Regelung der Garparameter dafür eingerichtet sind, eine Einstelltemperatur für den Garzyklus zu definieren.

8. Kochgerät gemäß Anspruch 7,
**dadurch gekennzeichnet, dass** der Prozessor (34) Vorrichtungen aufweist zum Auslösen eines Warrnhaltemodus am Ende eines Garzyklus und Vorrichtungen zum Einstellen der Einstelltemperatur der Kochplatten auf einen gerade ausreichenden Wert, um die Nahrungsmittel auf der Kochplatte (5, 6) in dem Warrnhaltemodus warm zu halten.

9. Kochgerät gemäß Anspruch 7 oder 8,
**dadurch gekennzeichnet, dass** der Prozessor (34) Vorrichtungen zum Berechnen eines Gleitdifferentialquotientenwertes der von dem Fühler gelieferten Temperatur aufweist und Vorrichtungen zum Bestimmen eines Abschaltzustandes der Heizwiderstände (7, 8) in Abhängigkeit von den laufenden Werten der von dem Fühler gelieferten Temperatur und von dem Gleitdifferentialquotienten.

10. Kochgerät gemäß einem der Ansprüche 7 bis 9,
**dadurch gekennzeichnet, dass** es Vorrichtungen zur Definierung der auf den Kochplatten angeordneten Nahrungsmittelart aufweist, wobei der Prozessor (34) Vorrichtungen zur Bestimmung der Garparameter in Abhängigkeit von der so definierten Nahrungsmittelart umfasst.

11. Kochgerät gemäß einem der Ansprüche 7 bis 10,
**dadurch gekennzeichnet, dass** der Prozessor (34) Vorrichtungen zur Erfassung eines Temperaturabsinkens aufweist, welches durch das Einlegen der auf der Kochplatte (5, 6) zu garenden Nahrungsmittel zustande kommt, und Vorrichtungen zum Auslösen eines Garzyklus sobald ein solches Temperaturabsinken erfasst wird.

## Claims

1. A cooking appliance of the type comprising:
- a casing formed by a bottom shell (1) and a top shell (2) fixed to one another by a joint (3) and kept spaced apart by first elastic return means (4),
- at least one hotplate (5, 6) disposed in the casing,
- locking means to keep the casing closed against the return means,
- means (12) for setting cooking parameters, and
- means for controlling the locking means in order to bring them into the unlocked position in dependence on the cooking parameters, and thus control the opening of the casing under the effect of the return means (4), the return means comprising:
- a locking member connected to one of the shells (1) so as to be movable between an unlocked position and a locked position in which it cooperates with a locking finger (24) integral with the other shell (2) to hold the casing in the closed position, **characterised in that** the locking means comprise:
- second elastic return means (22) to return the locking member into the unlocked position, and
- an electromagnet (25) controlled by the control means to hold the locking member in the locked position.

2. A cooking appliance according to claim 1, **characterised in that** it comprises two hotplates (5, 6) respectively mounted in the two casing shells (1, 2).

3. A cooking appliance according to claim 1 or 2, **characterised in that** the locking member is mounted to pivot about a pivot axis (30) parallel to the plane of opening of the bottom shell (1) and comprises three branches connected to its pivot and extending in a plane perpendicular to the said pivot axis, namely a first branch forming a hook (29) cooperating with the locking finger (24), a second branch forming a lever arm (21) supporting at its bottom end a plate (26) disposed to co-operate with the electromagnet (25), and a third branch supporting a flap (23) for closing a window (31) for introduction of the locking finger (24).

4. A cooking appliance according to any one of claims 1 to 3, **characterised in that** the means for controlling the locking means comprise a processor (34) connected to the means (12) for setting cooking parameters, designed to control the electromagnet (25) in dependence on the cooking parameters.

5. A cooking appliance according to claim 4, **characterised in that** it comprises an electric contact (45) actuated by opening of the casing and connected to the processor (34) to enable it to detect the open or closed position of the casing.

6. A cooking appliance according to claim 3 or 5, **characterised in that** the hotplates (5, 6) are coupled to electric heating resistances (7, 8), the appliance also comprising a relay (44) controlled by the processor (34) to control the electric power supply to the resistances.

7. A cooking appliance according to any one of claims 3 to 6, **characterised in that** the hotplates are associated with a temperature sensor (9) connected to the processor (34) which comprises means for controlling the power supply to the heating resistances (7, 8) of the hotplates (5, 6) so as to hold the latter at a reference temperature, the setting means (12) being designed to define a reference temperature of the cooking cycle.

8. A cooking appliance according to claim 7, **characterised in that** the processor (34) comprises means for triggering a hot-keeping cycle at the end of a cooking cycle, means for establishing the reference temperature for the hotplates at a value just sufficient to keep the food hot on the hotplates (5, 6) in the hot-keeping mode.

9. A cooking appliance according to claim 7 or 8, **characterised in that** the processor (34) comprises means for calculating a sliding derivative of the temperature delivered by the sensor, and means for evaluating a cut-off condition of the heating resistances (7, 8) in dependence on current values of the temperature as delivered by the sensor and the sliding derivative.

10. A cooking appliance according to any one of claims 7 to 9, **characterised in that** it comprises means for defining the type of food on the hot plates, the processor (34) comprising means for determining the cooking parameters in dependence on the type of food thus defined.

11. A cooking appliance according to any one of claims 7 to 10, **characterised in that** the processor (34) comprises means for detecting a temperature drop resulting from the introduction of the food for cooking on the hotplate (5, 6) and means for triggering a cooking cycle as soon as such temperature drop is detected.
